# EUROPEAN PATENT APPLICATION

(11) **EP 0 565 303 A2**
(43) Date of publication of application: **13.10.1993**
(21) Application number: 93302560.3
(22) Date of filing: 31.03.1993
(51) Int. Cl.: H02J 7/10

(54) **Battery charging**

(30) Priority: 07.04.1992 GB 9207573
(71) Applicant: CMP BATTERIES LIMITED, Over Hulton, Bolton, BL5 1DD (GB)
(72) Inventor: Dyson, James Ian, Mottram, Hyde, SK14 6NG (GB); McWhinnie, John, Heaton, Bolton BL1 5LS (GB); Stevenson, James Mark, Lymm WA13 9DW (GB)
(74) Representative: Allman, Peter John

(57) **Abstract**

A method and apparatus for charging a battery provides an improved charge factor and reduces the frequency of water replacement required. Current is supplied to a battery continuously in a primary charging phase 2 initially at a predetermined level to increase the battery voltage and is then gradually decreased as the voltage increased further. Once a predetermined level of charge has been attained pulses of current are supplied in a secondary charging phase 3.

## Description

The present invention relates to a method and apparatus for charging batteries.

Industrial batteries such as the lead acid type require charge in excess of the discharge to achieve a full state of charge. This overcharging is required to ensure full charge as the positive plate in particular has reduced charge efficiency as full charge is reached. Overcharging causes "gassing" whereby the electrolyte of the battery is subjected to electrolysis to emit gas bubbles. Gassing is desirable as it mixes the electrolyte which reduces or minimises stratification of the electrolyte. Water loss from the electrolyte which occurs by electrolysis is in consequence of and proportional to the overcharge. As a re- sultwater needs to be added periodically to top up the electrolyte. Conventional charging techniques result in charge factors of around 1.2 and water addition may be required at intervals of 5 to 10 cycles of charge and discharge.

One improved technique involves pumping air bubbles into the electrolyte to cause mixing throughout charging of the battery. This results in improved charging efficiency however the watering interval is limited as a result of evaporation throughout the cycle. This technique obviously requires the provision of separate air pumping facilities.

It is an object of the present invention to provide for an improved method and apparatus for battery charging which results in an improved charge factor and a reduction in the frequency of water replacement required.

In accordance with the present invention there is provided a method for charging a battery wherein current is supplied continuously to the battery in a primary charging phase, the primary charging phase being terminated when a predetermined state of charge has been attained, and pulses of current are supplied to the battery in a secondary charging phase after detection of said predetermined state of charge.

In this manner the pulses are applied during overcharge of the battery to cause gassing which results in mixing of an electrolyte of the battery.

Preferably the current in the primary charging phase is initially supplied at a predetermined value to increase the voltage of the battery and is then decreased as the voltage increases.

Preferably the pulses are separated by an interval of between 2 minutes and 30 minutes, each pulse being between 0.5 minutes and 10 minutes long.

In one example there are three pulses each separated by an interval of five minutes and each pulse being two minutes long.

In accordance with a second aspect of the present invention there is provided apparatus for charging a battery comprising a current source for supplying current to the battery to be charged, means for detecting a predetermined state of charge of the battery wherein the current source supplies current continuously during a primary charging phase until detection of said predetermined state of charge, and supplies pulses of current during a secondary charging phase after detection of said predetermined state of charge.

A specific embodiment of the present invention will now be described with reference to the accompanying drawings in which:
Figure 1 is a graph showing the variation of voltage and current of a battery with time during charge and discharge; and
Figure 2 is a graph showing the variation of end of discharge voltage with the number of charge and discharge cycles for three charge methods.

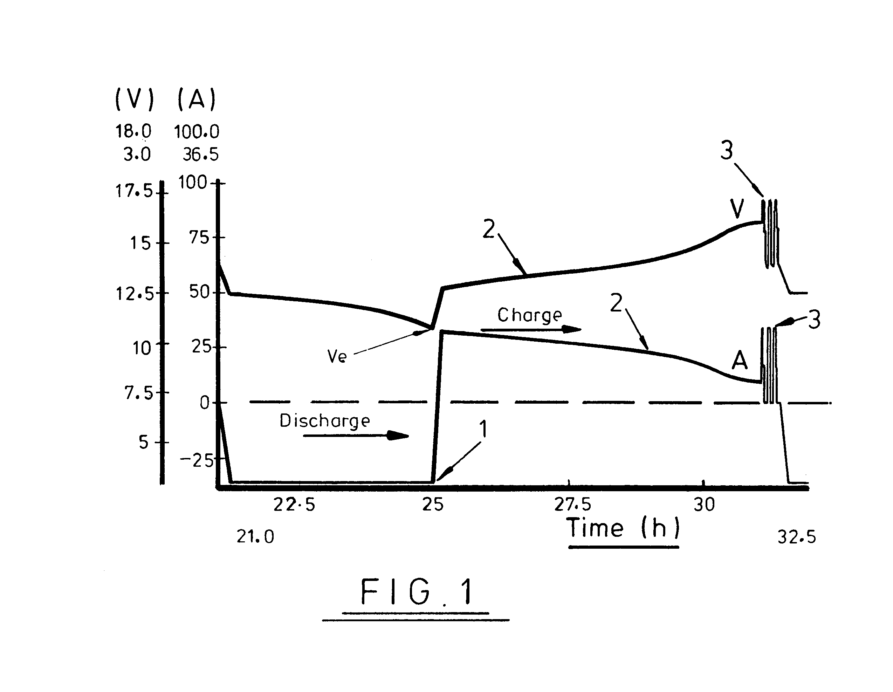

Referring to figure 1 the graph shows a typical discharge and charge cycle of a lead acid battery. Graph V indicates the variation of voltage of the battery with respect to time and graph A shows the current supplied to the battery in order to attain the voltage with respect to time. In the cycle the battery discharges for a period of four hours (shown as negative current) to point 1 whereupon the battery is charged for a period of five hours.

As can be seen from figure 1 the charge phase comprises a primary phase 2 in which current is continuously supplied to the battery to charge it to a predetermined charge level and a secondary phase 3 in which pulses of current are supplied to the battery.

During the primary charge phase 2 the current is initially set at a predetermined level of around 32 Amperes and is then gradually reduced over the remainder of the primary charge phase 2 as the battery voltage increases. This is known as the current taper.

In the secondary charging phase 3 in this particular embodiment the current is supplied in three pulses. Each pulse has a duration of two minutes and the interval between pulses is five minutes.

It is to be appreciated that this embodiment described gives only one configuration of pulsed current which achieves the desired results. It is to be understood that various other pulsed current arrangements may be used to the same effect. It is envisaged that the pulse period may be of any length in the range 0.5 minutes to 10 minutes and the interval between pulses may be in the range of 2 minutes to 30 minutes.

In the example shown in the figures the secondary charge phase was initiated when the charge factor reached 1.02 and the total recharge period was controlled to give a charge factor of 1.04.

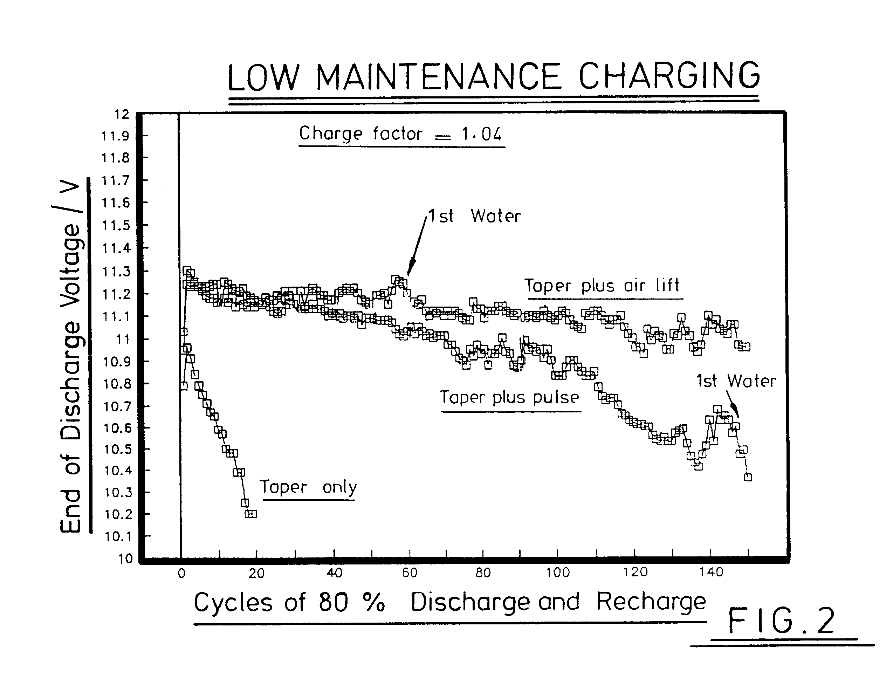

The maintenance of charge capacity of the battery is assessed in terms of the voltage at the end of the point of battery discharge (Ve) which can be seen in figure 2. The figure shows three graphs. The graph marked "taper plus pulse" indicates the performance of the present invention by showing the end of discharge voltage of the battery after each cycle of charge and discharge. As can be seen the batteryvol- tage declined slowly. The addition of water to the electrolyte was not required until 150 charge cycles had been completed.

The other graphs in figure 2 are shown for the purpose of comparison with known charge techniques. The graph marked "Taper plus air lift" indicates the results of a known method in which the current taper feature is used to together with the technique forcing air bubbles through the electrolyte by means of an air pump throughout the charging cycle to mix the electrolyte until gassing in overcharge occurs. In this method water had to be added after 66 cycles of charge and discharge. The technique of bubbling throughout the cycle causes water loss by evaporation as described above. The graph marked "Taper only" relates to a method which employs only the current reduction technique. As can be seen the end of discharge voltage declines with successive cycles to 80% of the nominal after eighteen cycles.

It may be advantageous to supply a small amount of charge to the battery after the last pulse to offset any reverse sulphuration effect on the positive plate.

It can thus be seen the present invention allows for a much longer interval between necessary water addition whilst still providing for an end of discharge voltage which is maintained above the nominal value after 150 cycles and gives an efficient charge factor of 1.04. It is likely that the declining end of discharge voltage of the graph of the present invention can be corrected by a small increase in the charge factor or by a periodic extra charge with only a small influence on the watering interval.

## Claims

1. A method for charging a battery wherein current is supplied continuously to the battery in a primary charging phase, the primary charging phase being terminated when a predetermined state of charge has been attained, and pulses of current are supplied to the battery in a secondary charging phase after detection of said predetermined state of charge.

2. A method for charging a battery according to claim 1 wherein the current in the primary charging phase is initially supplied at a predetermined level to increase the voltage of the battery and then decreased as the voltage increases.

3. A method according to any preceding claim in which each pulse period is between 0.5 minutes and 10 minutes long.

4. A method according to claim 3 wherein the pulse period is 2 minutes long.

5. A met hod according to claim 3 or4 in which there is an interval in the range of 2 minutes to 30 minutes between each pulse period.

6. A method according to claim 5 in which there is an interval of 5 minutes between each pulse period.

7. A method according to any preceding claim in which there are three periods of pulsed current.

8. Apparatus for charging a battery comprising a current source for supplying current to the battery to be charged, means for detecting a predetermined state of charge of the battery wherein the current source supplies current continuously during a primary charging phase until detection of said predetermined state of charge, and supplies pulses of current during a secondary charging phase after detection of said predetermined state of charge.

9. Apparatus for charging a battery according to claim 8 the current source supplies current at a predetermined level to increase the voltage of the battery and then gradually decreases the current as the voltage increases.

10. Apparatus according to claim 8 or 9 in which each pulse period is between 0.5 minutes and 10 minutes long.

11. Apparatus according to claim 10 wherein the pulse period is 2 minutes long.

12. Apparatus according to claim 10 or 11 wherein there is an interval in the range of 2 minutes to 30 minutes between each pulse period.

13. Apparatus according to claim 12 wherein there is an interval of 5 minutes between each pulse period.

14. Apparatus according to anyone of claims 8 to 13 in which there are three periods of pulsed current.

15. A method for charging a battery substantially as hereinbefore described with reference to the accompanying drawings.

16. Apparatus for charging a battery substantially as hereinbefore described with reference to the accompanying drawings.
